# EUROPEAN PATENT SPECIFICATION

(11) **EP 4 408 712 B1**
(45) Date of publication and mention of the grant of the patent: **05.11.2025**
(21) Application number: 22783033.8
(22) Date of filing: 21.09.2022
(51) Int. Cl.: B60T 8/17, B60T 8/26, B62L 3/02, B62L 3/08

(54) **ELECTRIC BICYCLE WITH COMBINED BRAKE ACTUATING SYSTEM FOR THE REAR AND THE FRONT BRAKES**
ELEKTROFAHRRAD MIT KOMBINIERTEM BREMSBETÄTIGUNGSSYSTEM FÜR DIE HINTERE UND VORDERE BREMSE
BICYCLETTE ÉLECTRIQUE AVEC SYSTÈME D'ACTIONNEMENT COMBINÉ DES FREINS ARRIÈRE ET AVANT

(30) Priority: 29.09.2021 IT 202100024983
(43) Date of publication of application: 07.08.2024
(73) Proprietor: BLUBRAKE S.P.A., 20122 Milano (IT)
(72) Inventor: TODESCHINI, Fabio, 20122 Milano (IT); PICCIRILLO, Giuseppe, 20122 Milano (IT); BERRETTA, Daniele, 20122 Milano (IT)
(74) Representative: Buzzi, Notaro & Antonielli d'Oulx S.p.A.
(86) International application number: PCT/IB2022/058906
(87) International publication number: WO 2023/052909

(56) References cited:
- EP-A2- 0 796 783
- CN-A- 105 730 595
- DE-A1- 102019 219 595
- US-A1- 2010 051 394

## Description

### Field of the invention

The present invention relates to electric bicycles, such as for example electrically-assisted pedaling bicycles. Although the invention was conceived and developed for an electric bicycle, it can also be used in an electric scooter or in light electric vehicles in general.

An electric bicycle of the type indicated in the preamble of the attached claim 1 is known both from document US 2010/051394 A1 and from document CN 105 730 595 A. Electric bicycles with a main brake lever that controls both the front and rear brakes, and also equipped with an ABS system, are known from documents DE 10 2019 219595 A1 and EP 0 796 783 A2.

### Object of the invention

An object of the present invention is to provide a braking system for an electric bicycle, or for an electric scooter or for a light electric vehicle, which guarantees the user, even when he is inexperienced, a condition of maximum safety during braking, in any operating condition of the bicycle.

Another object of the invention is that of achieving the aforesaid objective with simple and inexpensive means.

### Summary of the invention

In order to achieve this object, the invention relates to an electric bicycle, for example, a pedal-assisted bicycle, comprising the characteristics indicated in the attached claim 1.

The function of the back-up brake lever is to ensure maximum operational safety for the user, who can brake the vehicle using the back-up brake lever in the event of a malfunction of the main brake lever.

In a first solution, the electrically-operated ABS device is interposed both in the hydraulic connection between the pumping hydraulic cylinder of the main brake lever and the hydraulic actuator of the front brake, and in the hydraulic connection between the pumping hydraulic cylinder of the main brake lever and the hydraulic actuator of the rear brake, and is configured to decrease the fluid pressure supplied, both to said hydraulic actuator of the front brake, and to said hydraulic actuator of the rear brake during braking controlled by said main brake lever, in the event that a tendency of the front wheel to lock and/or a tendency of the rear wheel to lose contact with the ground is detected.

In a second solution, the electrically-operated ABS device is interposed only in the hydraulic connection between the pumping hydraulic cylinder of the main brake lever and the hydraulic actuator of the front brake, and is configured to decrease the fluid pressure supplied to said hydraulic actuator of the front brake during braking controlled by the main brake lever, in the event that the tendency of the front wheel to lock and/or a tendency of the rear wheel to lose contact with the ground is detected, while, in this condition, the pressure of the fluid supplied to the rear brake actuator is not decreased.

Preferably, the braking system is configured in such a way that for each value of the force applied to said main brake lever, the braking torque generated by said front brake is greater than the braking torque generated by said rear brake.

In a preferred embodiment, the ABS device comprises
- a body, defining an inner cavity, and having an inlet opening and an outlet opening communicating with said cavity,
- a floating member, slidably mounted within the inner cavity of the body,
- a main sealing ring, mounted on the floating member and engaged on the wall of said inner cavity, so as to define an upstream chamber within said cavity, which communicates with said inlet opening, and a downstream chamber communicating with said outlet opening,
- wherein said inlet opening is hydraulically connected to the pumping hydraulic cylinder of the main brake lever, while said outlet opening is hydraulically connected at least to the hydraulic actuator of the front brake,
- said floating member having a body with a passage for hydraulic communication between said upstream chamber and said downstream chamber, and being provided with a valve member that cooperates with a valve seat formed in the body of the floating member, for controlling said hydraulic communication through said passage,
- wherein said valve member is associated with at least one spring tending to keep the valve member engaged against said valve seat, in a closed position wherein the hydraulic communication between said upstream chamber and said downstream chamber is interrupted,
- said ABS device further comprising an electric motor configured to control the position of the floating member within the cavity of the body, in such a way that:
   - during a normal braking, said electric motor is inactive and said floating member is at a stroke-end position in the direction of the downstream chamber, wherein the valve member of the floating member interacts with an abutment element of the body, which holds the valve member in an open position, spaced apart from said valve seat, against the action of said at least one spring, so that during a normal braking, the fluid pumped by the pumping cylinder of the main operating lever can flow from said inlet opening to said outlet opening, in the direction at least of the hydraulic actuator of the front hydraulic brake of the bicycle,
   - while in conditions that require activation of the ABS, said electric motor is configured to be activated and to cause a movement of the floating member in the direction of said upstream chamber and away from said stroke-end position, so that the valve member is brought into its closed position by said at least one spring, so as to interrupt the communication between the upstream chamber and the downstream chamber, and so that the downstream chamber, increasing in volume generates a decrease in the pressure of the fluid supplied to the hydraulic actuator of the front brake,
   - wherein said ABS device also comprises a valve device configured to open the communication between the upstream chamber and the downstream chamber when the pressure in the downstream chamber becomes greater than the pressure in the upstream chamber by a differential higher than a predetermined threshold.

In the aforesaid first solution, the outlet opening of the ABS device is hydraulically connected both to the hydraulic actuator of the front brake and to the hydraulic actuator of the rear brake.

In the second solution mentioned above, however, the outlet opening of the ABS device is hydraulically connected only to the hydraulic actuator of the front brake.

As is evident from the above description, the invention allows a user, even if inexperienced, to operate the bicycle braking system in conditions of maximum safety, whatever the operating conditions of the vehicle, in particular, whatever the conditions of adhesion between the wheels and the ground, and whatever force is applied to the main actuating lever.

As already indicated above, the back-up brake lever may be used in the event of a malfunction of the main brake lever.

Thanks to the unidirectional valves, unwanted flows of fluid are avoided during the operation of the device. In particular, when the back-up brake lever is operated, the fluid pumped by the pumping cylinder of the back-up brake lever is prevented from rising into the hydraulic line controlled by the main brake lever, while during an actuation of the main brake lever, the pumped fluid is prevented from rising into the hydraulic line controlled by the back-up brake lever.

The present invention also relates to an electric scooter.

### Detailed description of the embodiments

Further characteristics and advantages of the invention will become apparent from the description that follows with reference to the attached drawings, provided purely by way of non-limiting example, wherein:
Figure 1 is a schematic view of a first embodiment of an electric bicycle equipped with a combined front brake and rear brake actuation system,
Figure 2 is a diagram illustrating the braking torque generated by the front brake and the braking torque generated by the rear brake as a function of the force exerted on the combined actuation lever of the front brake and the rear brake,
Figure 3 is a diagram of an additional embodiment wherein the combined front brake and rear brake actuation system also comprises an electrically-operated ABS device,
Figure 4 is a diagram illustrating the variation of the braking torque generated by the front brake and the braking torque generated by the rear brake, as a function of the force exerted on the main brake lever, in the case of intervention of an ABS device that controls both the front brake and the rear brake,
Figure 5 is a diagram of an additional embodiment that differs from that of Figure 3 in that the ABS device is configured to intervene to reduce the braking action of the front brake only,
Figure 6 is a diagram illustrating the variation of the braking torque exerted by the front brake and the rear brake, as a function of the force exerted on the main brake lever, in the case of intervention of the ABS device, for the system illustrated in Figure 5,
Figure 7 is a cross-sectional view of a preferred embodiment of the ABS device,
Figure 8 is a view on an enlarged scale of a detail of Figure 7, and
Figures 9, 10 illustrate variants of a detail of Figure 8.

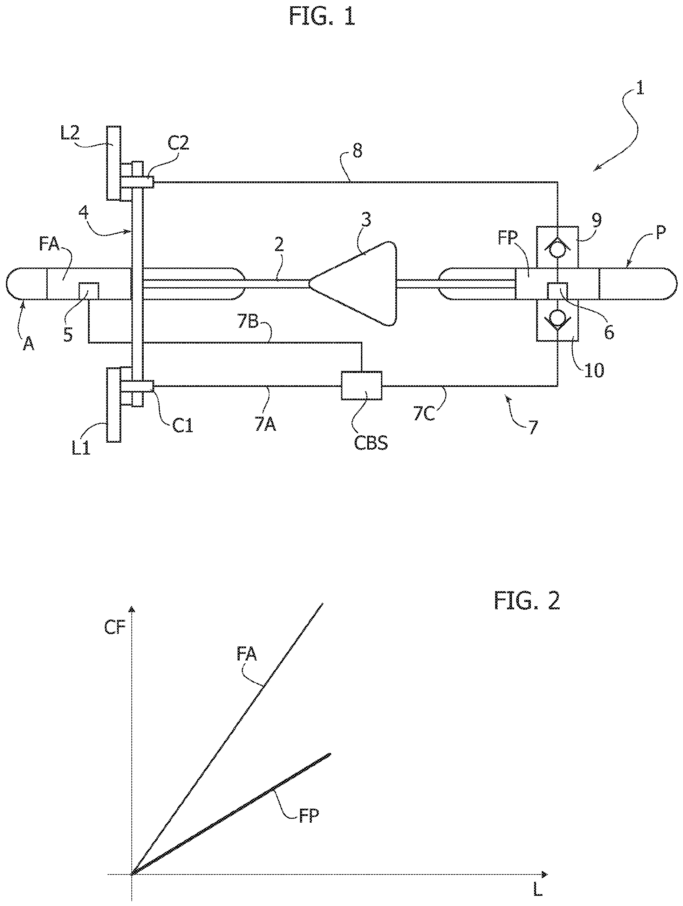

Figure 1 illustrates a schematic view of a braking system 1 associated with an electric bicycle, specifically a pedal-assisted electric bicycle. In the drawing, the references A, P indicate, respectively, the front wheel and the rear wheel of the bicycle. Reference 2 indicates the bicycle frame, with the saddle 3, and the reference 4 indicates the bicycle handlebar. Conventionally, the handlebar 4 is associated with a steering shaft rotatably mounted on the frame 2 and carrying a front fork (not illustrated) which rotates the front wheel A. The frame 2 rotates the rear wheel P and a pedal crank assembly (not shown) connected by a transmission chain (not illustrated) to the rear wheel hub. An electric motor (not illustrated) is also associated with the pedal crank assembly, configured and controlled to assist the rotation of the pedal crank assembly, in addition to the action of the cyclist.

Associated with the front wheel A is a hydraulically operated brake FA, typically a disc brake, having a hydraulic actuator 5. A hydraulically-actuated brake, typically a disc brake, having a hydraulic actuator 6 is associated with the rear wheel P. The brakes FA and FP and the respective hydraulic actuators 5, 6 are shown only schematically in the drawings, since they may be made in any known way and also because they, taken alone, do not fall within the scope of the invention.

In the bicycle according to the invention, a main brake lever L1 is provided, with which a pumping hydraulic cylinder C1 is associated, which is hydraulically connected both with the hydraulic actuator 5 of the front brake and with the hydraulic actuator 6 of the rear brake, through a hydraulic circuit, indicated in its entirety with 7.

The main brake lever L1 and the respective pumping hydraulic cylinder C1 may be made in any known way and are, therefore, shown only schematically in the drawings.

In the example shown in Figure 1, the hydraulic circuit 7 comprises a combined actuation unit of the brakes, indicated by CBS ("Combined Braking System"), which has an inlet connected via a line 7A to the hydraulic pumping cylinder C1, and two outlets connected by means of two lines 7B, 7C with the hydraulic actuators 5, 6 of the front brake and of the rear brake. The CBS unit may be made in any known way and may consist, for example, simply of a body with connecting passages between its only inlet and its two outlets, or even of a hydraulic cylinder that moves as a result of the arrival of fluid under pressure from the cylinder C1 and which transfers fluid under pressure towards its two outlets and towards the actuators 5, 6 of the front and rear brake.

Preferably, the braking system 1 is also equipped with an auxiliary brake lever L2 (which in the example is also associated with the handlebar 4) for operating the rear brake only (or an auxiliary rear brake). The lever L2 can be used, for example, in an emergency situation, in the event of a malfunction of the braking system associated with the main brake lever L1. The back-up brake lever L2 is also provided, in a per se known manner, with a pumping hydraulic cylinder C2 connected directly, via a hydraulic line 8, to the hydraulic actuator of the rear brake 6, or, alternatively, to the hydraulic actuator of a second rear brake associated with the rear wheel P (not shown). The back-up brake lever L2 and the respective pumping hydraulic cylinder C2 may also be made in any known way and are, therefore, only schematically illustrated in the drawings.

During normal operation, in the event of braking by actuating the main brake lever L1, the hydraulic circuit 7 activates the front and rear brakes of the bicycle.

In a concrete embodiment, the braking system is configured in such a way that, for a given force L applied to the main operating lever L1, the value of the braking torque generated by the front brake is greater than the value of the braking torque generated by the rear brake. This characteristic is illustrated in the diagram of Figure 2, which shows the variation of the braking torque CF generated by the front brake (line FA) and by the rear brake (line FP) as the value of the force L applied on the main brake lever L1 varies. In the example illustrated, the variations FA, FP are linear variations.

Again with reference to Figure 1, in the hydraulic line 8 connecting the pumping hydraulic cylinder C2 of the back-up brake lever L2 and the hydraulic actuator 6 of the rear brake a one-way valve 9 is interposed, which allows the passage of fluid only in the direction of the hydraulic actuator 6. Similarly, in the hydraulic line 7C of the hydraulic circuit 7 connected and controlled by the main brake lever L1, a one-way valve 10 is interposed, which allows the passage of fluid only in the direction of the hydraulic actuator 6. Thanks to this characteristic, when the back-up brake lever L2 is operated, the risk is avoided that fluid coming from the hydraulic line 8 can rise up into the hydraulic line 7C. Similarly, when the main brake lever L1 is operated, the risk is avoided that fluid coming from the hydraulic line 7C can rise up into the hydraulic line 8 associated with the back-up brake lever L2.

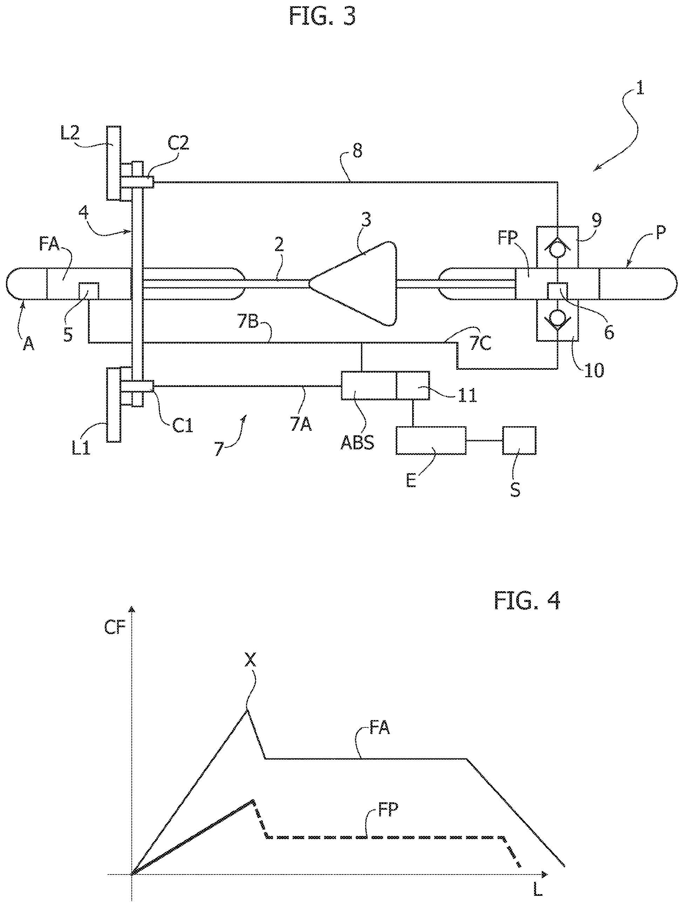

Figure 3 illustrates a second embodiment that differs from that of Figure 1 in that the hydraulic circuit 7 associated with the main brake lever L1 comprises an electrically-controlled ABS unit that performs the function of both the combined actuation unit of the front brake and rear brake, and of ABS units.

Electrically-operated ABS devices are known and have been used for some time, also in the field of electric bicycles. In the present description, the term ABS is used according to its conventional meaning in the art, that is, with reference to an Anti-Blocking System configured to reduce the action of a brake on a wheel, for example, when during braking, the wheel tends to lock up following a loss of grip with the ground.

An electrically-operated ABS device usable in an electric bicycle is described, for example, in WO 2019/155371 A1. The same Applicant has proposed ABS devices of the type specified above, of new conception, in WO 2021205334 A and WO 2021205337 A.

In Figure 3, the parts common to those of Figure 1 are indicated by the same references. Figure 3 refers to the case of an ABS device having an inlet connected via the hydraulic line 7A to the pumping hydraulic cylinder C1 of the main brake lever L1, and an outlet connected to both hydraulic lines 7B, 7C directed to the hydraulic actuators 5, 6 of the front brake and the rear brake.

As will be described in greater detail below, during normal braking caused by an intervention on the main brake lever L1, fluid under pressure is transferred from the ABS unit from line 7A to line 7B and to line 7C, causing the invention of the front brake and the rear brake. In this condition, the operation is completely similar to that of the solution illustrated in Figure 1.

In the case of the embodiment of Figure 3, however, the ABS unit includes an electric actuator 11 which is controlled by an electronic controller E on the basis of signals from one or more sensors S configured to detect an emergency condition, corresponding to a condition of locking a wheel and/or a condition of the bicycle tipping forward, with the rear wheel moving away from the ground.

According to a technique known per se, such sensors may be, for example, constituted by a sensor associated with the front wheel (in case it is desired to detect a locking condition of the front wheel only) and/or with the rear wheel, and configured to detect the variations in angular speed of rotation of the wheel, so as to promptly identify a condition of incipient locking. Alternatively or in addition to, sensors may be provided consisting of accelerometers, suitable for detecting vehicle deceleration beyond a determined threshold and/or sensors suitable for detecting load variations on the front wheel and on the rear wheel.

In a concrete embodiment example, the variation of the braking torque CF generated by the front brake and the rear brake, as the force L applied to the main brake lever L1 varies, is illustrated in Figure 4, with reference to an intervention condition of the ABS unit.

In an early step of braking, when the system is far from a locked wheel or bicycle tipping condition, the braking torque CF on the front and rear wheels grows normally, similar to what was shown in Figure 2. Upon reaching a value X of the force L applied to the main brake lever L1, the electronic controller E receives a signal from the sensors S indicative of an incipient condition of locking of the front wheel or of an incipient condition of overturning of the bicycle. In this situation, the controller E determines an activation of the actuator 11 so that the ABS unit reduces the fluid pressure supplied to the hydraulic actuators 5, 6 of the front and rear brakes. Consequently, as can be seen in Figure 4, the braking torques applied by the front brake and the rear brake cease to increase and indeed decrease to reduced values which then remain constant.

Thanks to the characteristics described above, the system according to the invention allows a user, even if inexperienced, to simultaneously actuate the front brake and the rear brake of the bicycle while always maintaining a condition of total safety, whatever the operating condition of the bicycle. i.e. whatever the speed of the bicycle, for example, the force applied on the main brake lever L1, whatever the conditions of adhesion of the wheels on the ground and whatever the load transfer on the front wheel during braking and the lightening of the load on the rear wheel when braking.

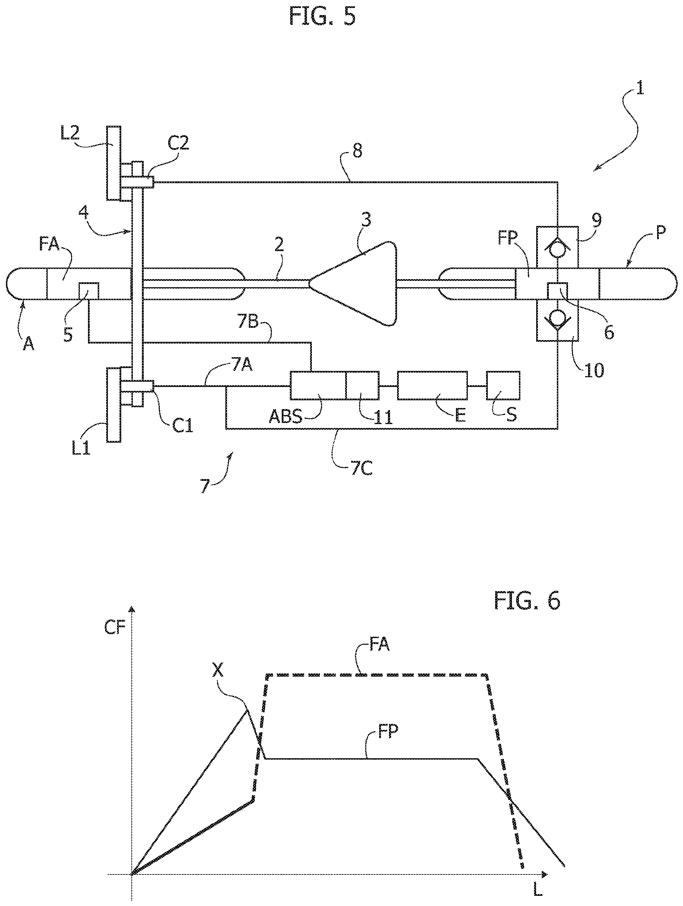

Figure 5 illustrates another embodiment that differs from that of Figure 3 only in that the ABS unit has its outlet connected only to the hydraulic line 7B for operating the hydraulic actuator 5 of the front brake. In this embodiment, the hydraulic actuator 6 of the rear brake is connected through the line 7C directly to the line 7A of the pumping hydraulic cylinder C1.

In this case, braking wherein the ABS unit intervenes leads to a decrease in braking torque on the front brake FA only, as shown in the diagram in Figure 6. When the limit condition X is reached, the braking torque CF on the front brake FA is reduced, while the hydraulic actuator 6 of the rear brake FP continues to receive fluid under pressure without any reduction in pressure, so that the braking torque CF of the rear brake FP also increases after the intervention point X of the ABS unit, up to a possible locking of the rear wheel, which determines a constant variation of the braking torque on the rear brake FP as the force L exerted on the main brake lever L1 varies. Locking the rear wheel is not harmful, as it ensures that the front wheel does not lose grip with the ground, thanks to the intervention of the ABS unit.

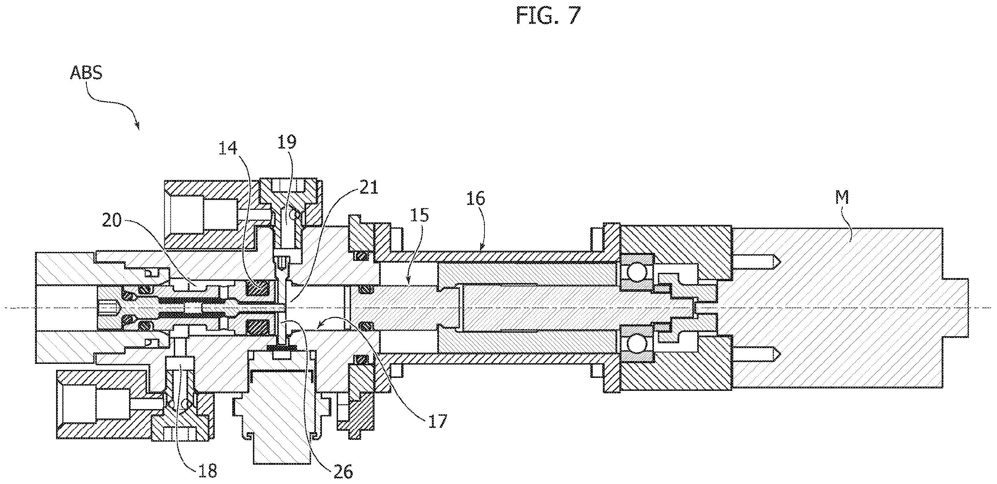

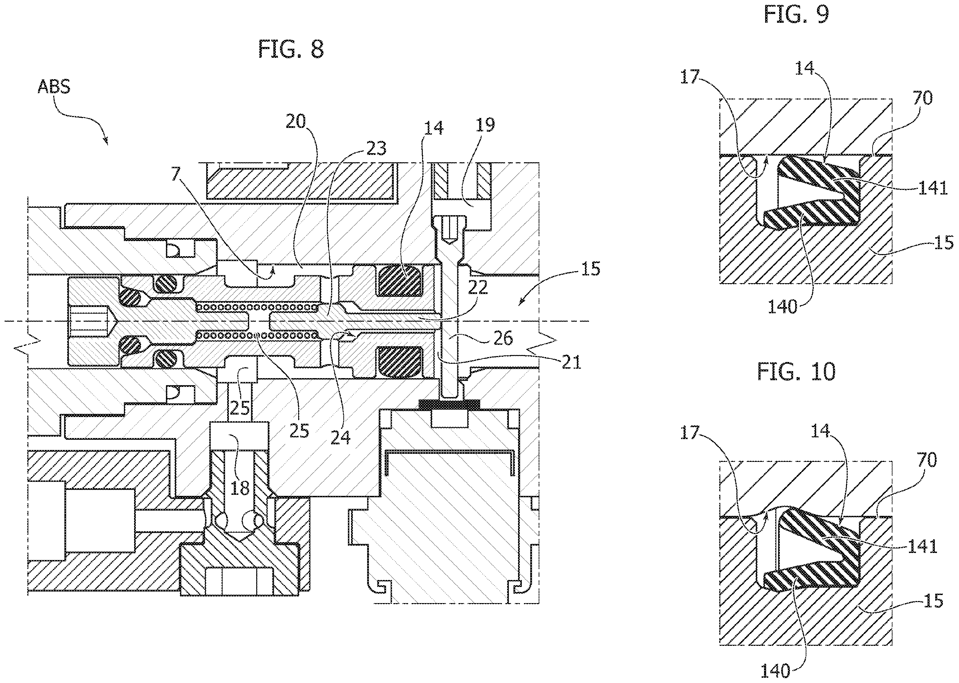

In a preferred embodiment, the ABS unit, both in the case of connection with both the front and rear brakes (Figure 3) and in the case of connection only with the front brake (Figure 5), can be made according to the example illustrated in the Figures 7, 8, which corresponds to a solution proposed in the international patent application PCT/IB2021/052840 by the same Applicant, still secret at the priority date of the present invention.

With reference to these figures, the ABS unit comprises a body 16 defining an inner cavity 17 and having an inlet opening 18 and an outlet opening 19 communicating with the cavity 7. A floating member 15 is slidably mounted within the inner cavity 17 of the body 6. On the floating member is mounted a main sealing ring 14, which is in engagement against the wall of the inner cavity 17, so as to define an upstream chamber 20 within the cavity 7, communicating with the inlet opening 18 and a downstream chamber 21, communicating with the outlet opening 19.

As already indicated above, the inlet opening 18 of the ABS unit is hydraulically connected to the pumping cylinder C1 of the main brake lever L1, while the outlet opening 9 is hydraulically connected to the hydraulic actuators 5,6 of the front brake and of the rear brake (in the case of the solution in Figure 3), or only with the hydraulic actuator 5 of the front brake (in the case of the solution in Figure 5).

As better visible in Figure 8, a passage 22 is formed in the body of the floating member 15 for the hydraulic communication between the upstream chamber 20 and the downstream chamber 21. The passage 22 is controlled by a valve member 23, which cooperates with a valve seat 24 formed in the body of the floating member 15. Associated with the valve member 23 is at least one spring 25, which tends to keep the valve member 23 in engagement against the valve seat 24, in a closed position wherein the hydraulic communication between the upstream chamber 20 and the downstream chamber 21.

With reference to Figure 7, the ABS unit further comprises an electric actuator (corresponding to the actuator 11 in Figures 3,5) in the form of an electric motor M, configured to control the position of the floating member 15 within the cavity 17 of the ABS unit.

During normal braking, the electric motor M is inactive and the floating member 15 is in an stroke-end position in the direction of the downstream chamber 21, wherein the valve member 23 of the floating member 15 interacts with an abutment element 26 of the body 16 of the ABS unit (in the specific case a transverse pin), which keeps the valve member 23 in an open position, spaced apart from the valve seat 24, against the action of the spring 25. Therefore, during normal braking, the fluid pumped by the pumping cylinder C1 can flow from the inlet opening 18 to the outlet opening 19 in the direction of both the hydraulic actuators of the front brake and the rear brake (in the case of the solution of Figure 3) or only the hydraulic actuator of the front brake (in the case of the solution of Figure 5).

If, on the other hand, the electronic controller E receives a signal indicating the need for intervention of the ABS unit, the electronic control E activates the electric motor M, which commands a movement of the floating member 15 in the direction of the upstream chamber 20 and away from the aforesaid stroke-end position (i.e. towards the left with reference to Figures 7,8), so that the valve member 23 is brought into its closed position by the spring 25, so as to interrupt the communication between the upstream chamber 20 and the downstream chamber 21. In this condition, the downstream chamber 21 increases in volume, generating a decrease in the pressure of the fluid supplied to the ABS unit.

Furthermore, the ABS unit comprises a valve device configured to open the communication between the upstream chamber 20 and the downstream chamber 21 in any condition wherein the pressure of the downstream chamber 21 becomes greater than the pressure of the upstream chamber 20 due to a differential higher than a predetermined threshold.

In the case of the example illustrated in Figures 7, 8 this result is always guaranteed by the same valve member 23. When the floating member 15 is moved away from its stroke-end position and the valve member 23 is in its closed position, in contact with the valve seat 24, the valve member in any case has a surface exposed to the environment. of the downstream chamber 21, so that an overpressure in the downstream chamber 21 causes an opening of the valve member 23, against the action of the spring 25.

As an alternative to this solution, a lip configuration of the type illustrated in Figure 9 can be provided for the main seal ring 14. In this case, the sealing ring 14 has a portion 140 secured within a circumferential groove of the body of the floating member 15, and an outer circumferential lip 141, which is in contact with the wall of the cavity 7. The groove wherein the sealing ring 14 is received is - in any case - always in communication with the environment of the downstream chamber 21 through an annular gap 70 defined between the outer surface of the floating member 15 and the wall of the cavity 7. The sealing lip 141, therefore, controls the communication between the downstream chamber 21 and the upstream chamber 20. In the event of overpressure in the downstream chamber 21, the circumferential lip 141 deforms radially inwards, putting the chambers 20, 21 in communication.

Figure 10 illustrates another variant, which corresponds to a solution that has formed the subject of the international patent application PCT/IB2021/052840 by the same Applicant, still secret at the priority date of the present invention. In this case, the sealing ring, which may be of the conventional type illustrated in Figure 8, or of the circumferential lip type of the type illustrated in Figure 9 and in Figure 10 itself, cooperates with a portion of the inner wall of the cavity 7 shaped in such a way that when the floating member 15 moves away from its stroke-end position illustrated in Figure 8, i.e. it moves to the left (with reference to the drawings), towards the upstream chamber 20, the sealing ring 14 loses the contact with the wall of the cavity 7, so that it puts the upstream chamber in communication with the downstream chamber. In this way, the sealing ring 14 is able to perform the function that in the solution of Figures 7, 8 is performed by the valve member 23. In other words, in the case of the solution in Figure 10, the floating member 15 can be devoid of the inner passage 22 and the valve member 23.

Of course, without prejudice to the principle of the invention, the details of construction and the embodiments may vary widely with respect to those described and illustrated purely by way of example, without departing from the scope of the present invention as defined in the appended claims.

## Claims

1. An electric bicycle, for example a pedal-assisted bicycle, comprising:
- a front wheel (A) and a rear wheel (P), and a braking system comprising:
- a front brake (FA) associated with the front wheel (A) and provided with a hydraulic actuator (5),
- a rear brake (FP) associated with the rear wheel (P) and provided with a hydraulic actuator (6),
wherein the braking system further comprises a main brake lever (L1) for combined actuation of the front brake (FA) and the rear brake (FP), with which a hydraulic pumping cylinder (C1) is associated, and a hydraulic connecting circuit (7) that operatively connects the hydraulic pumping cylinder (C1) of the main brake lever (L1) with the hydraulic actuator (5) of the front brake (FA) and with the hydraulic actuator (6) of the rear brake (FP),
wherein the braking system further comprises a back-up brake lever (L2), with which a pumping hydraulic cylinder (C2) is associated, and a hydraulic line (8) operatively connecting the pumping hydraulic cylinder (C2) of the back-up brake lever (L2) only with the hydraulic actuator (6) of the rear brake or only with a hydraulic actuator associated with an auxiliary rear brake,
said bicycle being **characterized in that** the braking system further comprises:
- an electrically-operated ABS device, interposed in the hydraulic connection (7) between the hydraulic pumping cylinder (C1) of the main brake lever (L1) and at least the hydraulic actuator (5) of the front brake,
- said ABS device being configured to decrease the fluid pressure supplied to said hydraulic actuator (5) of the front brake during a braking controlled by said main brake lever (L1), in case a tendency of the front wheel (A) to lock and/or a tendency of the rear wheel (P) to lose contact with the ground is detected,
- one or more sensors (S) configured to detect, during braking of the electric bicycle, a tendency of the front wheel (A) to lock and/or a tendency of the rear wheel (P) to lose contact with the ground, and
- an electronic controller (E) programmed to activate the ABS device upon receipt of a signal from said one or more sensors (S), whereby in the hydraulic line (8) that connects the pumping hydraulic cylinder (C2) of the back-up brake lever (L2) with the hydraulic actuator (6) of the rear brake (FP) there is a first one-way valve (9), which allows a passage of fluid only in the direction of the hydraulic actuator (6) of the rear brake (FP), while in a hydraulic line (7C) that connects the pumping hydraulic cylinder (C1) of the main brake lever (L1) or the ABS device, with the hydraulic actuator (6) of the rear brake (FP), a second one-way valve (10) is interposed, which allows a passage of fluid only in the direction of the hydraulic actuator (6) of the rear brake (FP).

2. An electric bicycle according to claim 1, **characterized in that** said electrically-operated ABS device is interposed both in the hydraulic connection between the pumping hydraulic cylinder (C1) of the main brake lever (L1) and the hydraulic actuator (5) of the front brake, and in the hydraulic connection between the pumping hydraulic cylinder (C1) of the main brake lever (L1) and the hydraulic actuator (6) of the rear brake, and is configured to decrease the fluid pressure supplied, both to said hydraulic actuator (5) of the front brake, and to said hydraulic actuator (6) of the rear brake during braking controlled by said main brake lever (L1), in the event that a tendency of the front wheel (A) to lock and/or a tendency of the rear wheel (P) to lose contact with the ground is detected.

3. An electric bicycle according to any one of the preceding claims, **characterized in that** said braking system is configured in such a way that for each value of the force applied to said main brake lever (L1), the braking torque generated by said front brake (FA) is greater than the braking torque generated by said rear brake (FP).

4. An electric bicycle according to claim 1, **characterized in that** said ABS device comprises:
- a body (16), defining an inner cavity (17), and having an inlet opening (18) and an outlet opening (19) communicating with said cavity (17),
- a floating member (15), slidably mounted within the inner cavity (17) of the body (6),
- a main sealing ring (14), mounted on the floating member (15) and engaged on the wall of said inner cavity (17), so as to define an upstream chamber (20) within said cavity (17), which communicates with said inlet opening (18), and a downstream chamber (21) communicating with said outlet opening (19),
- wherein said inlet opening (18) is hydraulically connected to the pumping hydraulic cylinder (C1) of the main brake lever (L1), while said outlet opening (19) is hydraulically connected at least to the hydraulic actuator (5) of the front brake (FA),
- said floating member (15) having a body with a passage (22) for hydraulic communication between said upstream chamber (20) and said downstream chamber (21), and being provided with a valve member (23) that cooperates with a valve seat (24) formed in the body of the floating member (15), for controlling said hydraulic communication through said passage (22),
- wherein said valve member (23) is associated with at least one spring (25) tending to keep the valve member (23) engaged against said valve seat (24), in a closed position wherein the hydraulic communication between said upstream chamber (20) and said downstream chamber (21) is interrupted,
- said ABS device further comprising an electric motor (M) configured to control the position of the floating member (15) within the cavity (17) of the body (16), in such a way that:
- during a normal braking, said electric motor (M) is inactive and said floating member (15) is at a stroke-end position in the direction of the downstream chamber (21), wherein the valve member (23) of the floating member (15) interacts with an abutment element (26) of the body (16), which holds the valve member (23) in an open position, spaced apart from said valve seat (24), against the action of said at least one spring (25), so that during a normal braking, the fluid pumped by the pumping device (C1) of the main operating lever can flow from said inlet opening (18) to said outlet opening (19), in the direction at least of the hydraulic actuator (5) of the front hydraulic brake (FA) of the bicycle,
- while in conditions that require the activation of the ABS, said electric motor (M) is configured to be activated and to cause a movement of the floating member (15) in the direction of said upstream chamber (20) and away from said stroke-end position, so that the valve member (23) is brought into its closed position by said at least one spring (25), so as to interrupt the communication between the upstream chamber (20) and the downstream chamber (21), and so that the downstream chamber (21) increases in volume and generating a decrease in the pressure of the fluid supplied to the hydraulic actuator (5) of the front brake,
- wherein said ABS device (2) further comprises a valve device (23; 141) configured to open the communication between the upstream chamber (20) and the downstream chamber (21) when the pressure in the downstream chamber (21) becomes greater than the pressure in the upstream chamber (20) by a differential higher than a predetermined threshold.

5. An electric bicycle according to claim 4, **characterized in that** said outlet opening (19) of the ABS device is hydraulically connected only with the hydraulic actuator (5) of the front brake (FA).

6. An electric bicycle according to claim 4, **characterized in that** said outlet opening (19) of the ABS device is hydraulically connected both with the hydraulic actuator (5) of the front brake (FA), and with the hydraulic actuator (6) of the rear brake (FP).

7. An electric scooter, with a front wheel and a rear wheel and a braking system as indicated in one or more of the preceding claims.

## Patentansprüche

1. Elektrofahrrad, beispielsweise ein pedalunterstütztes Fahrrad, umfassend:
- ein Vorderrad (A) und ein Hinterrad (P) und ein Bremssystem, umfassend:
- eine Vorderbremse (FA), die mit dem Vorderrad (A) verbunden und mit einem hydraulischen Aktuator (5) versehen ist,
- eine Hinterbremse (FP), die mit dem Hinterrad (P) verbunden und mit einem hydraulischen Aktuator (6) versehen ist,
wobei das Bremssystem weiter umfasst: einen Hauptbremshebel (L1) zur kombinierten Betätigung der Vorderbremse (FA) und der Hinterbremse (FP), mit dem ein hydraulischer Pumpzylinder (C1) verbunden ist, und einen hydraulischen Verbindungskreis (7), der den hydraulischen Pumpzylinder (C1) des Hauptbremshebels (L1) mit dem hydraulischen Aktuator (5) der Vorderbremse (FA) und mit dem hydraulischen Aktuator (6) der Hinterbremse (FP) funktionsfähig verbindet,
wobei das Bremssystem weiter einen Reservebremshebel (L2) umfasst, mit dem ein hydraulischer Pumpzylinder (C2) verbunden ist, und eine Hydraulikleitung (8), die den hydraulischen Pumpzylinder (C2) des Reservebremshebels (L2) nur mit dem hydraulischen Aktuator (6) der Hinterbremse oder nur mit einem mit einer Hilfs-Hinterbremse verbundenen hydraulischen Aktuator funktionsfähig verbindet,
wobei das Fahrrad **dadurch gekennzeichnet ist, dass** das Bremssystem weiter umfasst:
- eine elektrisch betätigte ABS-Vorrichtung, die in die Hydraulikverbindung (7) zwischen dem hydraulischen Pumpzylinder (C1) des Hauptbremshebels (L1) und mindestens dem hydraulischen Aktuator (5) der Vorderbremse geschaltet ist,
- wobei die ABS-Vorrichtung so konfiguriert ist, dass sie den dem hydraulischen Aktuator (5) der Vorderbremse zugeführten Fluiddruck während eines durch den Hauptbremshebel (L1) gesteuerten Bremsvorgangs verringert, falls eine Tendenz des Vorderrads (A) zum Blockieren und/oder eine Tendenz des Hinterrads (P) zum Verlust des Bodenkontakts detektiert wird,
- wobei ein oder mehrere Sensoren (S) so konfiguriert sind, dass sie während des Bremsvorgangs des Elektrofahrrads eine Tendenz des Vorderrads (A) zum Blockieren und/oder eine Tendenz des Hinterrads (P) zum Verlust des Bodenkontakts detektieren, und
- wobei eine elektronische Steuereinheit (E) so programmiert ist, dass sie die ABS-Vorrichtung bei Empfang eines Signals von dem einen oder den mehreren Sensoren (S) aktiviert, wobei in der Hydraulikleitung (8), die den hydraulischen Pumpzylinder (C2) des Reservebremshebels (L2) mit dem hydraulischen Aktuator (6) der Hinterbremse (FP) verbindet, ein erstes Einwegventil (9) vorgesehen ist, das einen Durchgang von Fluid nur in der Richtung des hydraulischen Aktuators (6) der Hinterbremse (FP) ermöglicht, während in einer Hydraulikleitung (7C), die den hydraulischen Pumpzylinder (C1) des Hauptbremshebels (L1) oder die ABS-Vorrichtung mit dem hydraulischen Aktuator (6) der Hinterbremse (FP) verbindet, ein zweites Einwegventil (10) zwischengeschaltet ist, das einen Durchgang von Fluid nur in der Richtung des hydraulischen Aktuators (6) der Hinterbremse (FP) ermöglicht.

2. Elektrofahrrad nach Anspruch 1, **dadurch gekennzeichnet, dass** die elektrisch betriebene ABS-Vorrichtung sowohl in die Hydraulikverbindung zwischen dem hydraulischen Pumpzylinder (C1) des Hauptbremshebels (L1) und dem hydraulischen Aktuator (5) der Vorderbremse als auch in die Hydraulikverbindung zwischen dem hydraulischen Pumpzylinder (C1) des Hauptbremshebels (L1) und dem hydraulischen Aktuator (6) der Hinterbremse geschaltet ist, und so konfiguriert ist, dass sie den Fluiddruck, der sowohl dem hydraulischen Aktuator (5) der Vorderbremse als auch dem hydraulischen Aktuator (6) der Hinterbremse zugeführt wird, während des durch den Hauptbremshebel (L1) gesteuerten Bremsvorgangs verringert, falls eine Tendenz des Vorderrades (A) zum Blockieren und/oder eine Tendenz des Hinterrades (P) zum Verlust des Bodenkontakts detektiert wird.

3. Elektrofahrrad nach einem der vorstehenden Ansprüche, **dadurch gekennzeichnet, dass** das Bremssystem so konfiguriert ist, dass für jeden Wert der auf den Hauptbremshebel (L1) ausgeübten Kraft das von der Vorderbremse (FA) erzeugte Bremsmoment größer ist als das von der Hinterbremse (FP) erzeugte Bremsmoment.

4. Elektrofahrrad nach Anspruch 1, **dadurch gekennzeichnet, dass** die ABS-Vorrichtung umfasst:
- einen Körper (16), der einen inneren Hohlraum (17) definiert und eine Einlassöffnung (18) und eine Auslassöffnung (19) aufweist, die mit dem Hohlraum (17) in Verbindung stehen,
- ein schwimmendes Element (15), das verschiebbar innerhalb des inneren Hohlraums (17) des Körpers (6) montiert ist,
- einen Hauptdichtungsring (14), der auf dem schwimmenden Element (15) montiert ist und an der Wand des inneren Hohlraums (17) angreift, um eine stromaufwärtige Kammer (20) innerhalb des Hohlraums (17) zu definieren, die mit der Einlassöffnung (18) in Verbindung steht, und eine stromabwärtige Kammer (21), die mit der Auslassöffnung (19) in Verbindung steht,
- wobei die Einlassöffnung (18) hydraulisch mit dem hydraulischen Pumpzylinder (C1) des Hauptbremshebels (L1) verbunden ist, während die Auslassöffnung (19) mindestens mit dem hydraulischen Aktuator (5) der Vorderbremse (FA) hydraulisch verbunden ist,
- wobei das schwimmende Element (15) einen Körper mit einem Durchgang (22) für eine hydraulische Verbindung zwischen der stromaufwärtigen Kammer (20) und der stromabwärtigen Kammer (21) aufweist und mit einem Ventilelement (23) versehen ist, das mit einem in dem Körper des schwimmenden Elements (15) ausgebildeten Ventilsitz (24) zusammenwirkt, um die hydraulische Verbindung durch den Durchgang (22) zu steuern,
- wobei das Ventilelement (23) mit mindestens einer Feder (25) verbunden ist, die dazu neigt, das Ventilelement (23) gegen den Ventilsitz (24) gedrückt zu halten, in einer geschlossenen Position, in der die hydraulische Verbindung zwischen der stromaufwärtigen Kammer (20) und der stromabwärtigen Kammer (21) unterbrochen ist,
- wobei die ABS-Vorrichtung weiter einen Elektromotor (M) umfasst, der so konfiguriert ist, dass er die Position des schwimmenden Elements (15) innerhalb des Hohlraums (17) des Körpers (16) so steuert, dass:
- während einer normalen Bremsung der Elektromotor (M) inaktiv ist und sich das schwimmende Element (15) in einer Hubendposition in der Richtung der stromabwärtigen Kammer (21) befindet, wobei das Ventilelement (23) des schwimmenden Elements (15) mit einem Anschlagelement (26) des Körpers (16) zusammenwirkt, das das Ventilelement (23) in einer offenen Position hält, beabstandet von dem Ventilsitz (24), entgegen der Wirkung der mindestens einen Feder (25), so dass während einer normalen Bremsung das von der Pumpvorrichtung (C1) des Hauptbetätigungshebels gepumpte Fluid von der Einlassöffnung (18) zu der Auslassöffnung (19) in der Richtung mindestens des hydraulischen Aktuators (5) der vorderen hydraulischen Bremse (FA) des Fahrrads fließen kann,
- während unter Bedingungen, die die Aktivierung des ABS erfordern, der Elektromotor (M) so konfiguriert ist, dass er aktiviert wird und eine Bewegung des schwimmenden Elements (15) in der Richtung der stromaufwärtigen Kammer (20) und weg von der Hubendposition bewirkt, so dass das Ventilelement (23) durch die mindestens eine Feder (25) in seine geschlossene Position gebracht wird, um die Verbindung zwischen der stromaufwärtigen Kammer (20) und der stromabwärtigen Kammer (21) zu unterbrechen, und so dass das Volumen der stromabwärtigen Kammer (21) zunimmt und ein Druckabfall in dem dem hydraulischen Aktuator (5) der Vorderbremse zugeführten Fluid erzeugt wird,
- wobei die ABS-Vorrichtung (2) weiter eine Ventilvorrichtung (23; 141) umfasst, die so konfiguriert ist, dass sie die Verbindung zwischen der stromaufwärtigen Kammer (20) und der stromabwärtigen Kammer (21) öffnet, wenn der Druck in der stromabwärtigen Kammer (21) um einen Differenzwert, der höher als ein vorbestimmter Schwellenwert ist, größer als der Druck in der stromaufwärtigen Kammer (20) wird.

5. Elektrofahrrad nach Anspruch 4, **dadurch gekennzeichnet, dass** die Auslassöffnung (19) der ABS-Vorrichtung nur mit dem hydraulischen Aktuator (5) der Vorderbremse (FA) hydraulisch verbunden ist.

6. Elektrofahrrad nach Anspruch 4, **dadurch gekennzeichnet, dass** die Auslassöffnung (19) der ABS-Vorrichtung sowohl mit dem hydraulischen Aktuator (5) der Vorderbremse (FA) als auch mit dem hydraulischen Aktuator (6) der Hinterbremse (FP) hydraulisch verbunden ist.

7. Elektroroller mit einem Vorderrad und einem Hinterrad und einem Bremssystem nach einem oder mehreren der vorstehenden Ansprüche.

## Revendications

1. Bicyclette électrique, par exemple une bicyclette à pédalage assisté, comprenant :
- une roue (A) avant et une roue (P) arrière, et un système de freinage comprenant :
- un frein (FA) avant associé à la roue (A) avant et doté d'un actionneur (5) hydraulique,
- un frein (FP) arrière associé à la roue (P) arrière et doté d'un actionneur (6) hydraulique,
dans laquelle le système de freinage comprend en outre un levier (L1) de frein principal pour l'actionnement combiné du frein (FA) avant et du frein (FP) arrière, auquel est associé un vérin (C1) de pompage hydraulique, et un circuit (7) de liaison hydraulique qui relie fonctionnellement le vérin (C1) de pompage hydraulique du levier (L1) de frein principal à l'actionneur (5) hydraulique du frein (FA) avant et à l'actionneur (6) hydraulique du frein (FP) arrière,
dans laquelle le système de freinage comprend en outre un levier (L2) de frein de secours, auquel est associé un vérin (C2) hydraulique de pompage, et une conduite (8) hydraulique reliant fonctionnellement le vérin (C2) hydraulique de pompage du levier (L2) de frein de secours uniquement à l'actionneur (6) hydraulique du frein arrière ou uniquement à un actionneur hydraulique associé à un frein arrière auxiliaire,
ladite bicyclette étant **caractérisée en ce que** le système de freinage comprend en outre :
- un dispositif ABS à commande électrique, interposé dans la liaison (7) hydraulique entre le vérin (C1) de pompage hydraulique du levier (L1) de frein principal et au moins l'actionneur (5) hydraulique du frein avant,
- ledit dispositif ABS étant configuré pour diminuer la pression de fluide apportée audit actionneur (5) hydraulique du frein avant pendant un freinage commandé par ledit levier (L1) de frein principal, dans le cas où une tendance de la roue (A) avant à se bloquer et/ou une tendance de la roue (P) arrière à perdre le contact avec le sol sont détectées,
- un ou plusieurs capteurs (S) configurés pour détecter, pendant le freinage de la bicyclette électrique, une tendance de la roue (A) avant à se bloquer et/ou une tendance de la roue (P) arrière à perdre le contact avec le sol, et
- un dispositif de commande (E) électronique programmé pour activer le dispositif ABS à réception d'un signal provenant desdits un ou plusieurs capteurs (S), moyennant quoi
dans la conduite (8) hydraulique qui relie le vérin (C2) hydraulique de pompage du levier (L2) de frein de secours à l'actionneur (6) hydraulique du frein (FP) arrière se trouve un premier clapet (9) de non-retour, qui permet un passage de fluide uniquement dans la direction de l'actionneur (6) hydraulique du frein (FP) arrière, tandis que dans une conduite (7C) hydraulique qui relie le vérin (C1) hydraulique de pompage du levier (L1) de frein principal ou le dispositif ABS, à l'actionneur (6) hydraulique du frein (FP) arrière, est interposé un second clapet (10) de non-retour, qui permet un passage de fluide uniquement dans la direction de l'actionneur (6) hydraulique du frein (FP) arrière.

2. Bicyclette électrique selon la revendication 1, **caractérisée en ce que** ledit dispositif ABS à commande électrique est interposé à la fois dans la liaison hydraulique entre le vérin (C1) hydraulique de pompage du levier (L1) de frein principal et l'actionneur (5) hydraulique du frein avant, et dans la liaison hydraulique entre le vérin (C1) hydraulique de pompage du levier (L1) de frein principal et l'actionneur (6) hydraulique du frein arrière, et est configuré pour diminuer la pression de fluide apportée, à la fois audit actionneur (5) hydraulique du frein avant, et audit actionneur (6) hydraulique du frein arrière pendant un freinage commandé par ledit levier (L1) de frein principal, dans le cas où une tendance de la roue (A) avant à se bloquer et/ou une tendance de la roue (P) arrière à perdre le contact avec le sol sont détectées.

3. Bicyclette électrique selon l'une quelconque des revendications précédentes, **caractérisée en ce que** ledit système de freinage est configuré d'une manière telle que, pour chaque valeur de la force appliquée audit levier (L1) de frein principal, le couple de freinage généré par ledit frein (FA) avant est supérieur au couple de freinage généré par ledit frein (FP) arrière.

4. Bicyclette électrique selon la revendication 1, **caractérisée en ce que** le dispositif ABS comprend :
- un corps (16), définissant une cavité (17) interne, et présentant une ouverture (18) d'entrée et une ouverture (19) de sortie communiquant avec ladite cavité (17),
- un élément (15) flottant, monté de manière coulissante dans la cavité (17) interne du corps (6),
- une bague (14) d'étanchéité principale, montée sur l'élément (15) flottant et en prise sur la paroi de ladite cavité (17) interne, de manière à définir une chambre (20) amont dans ladite cavité (17), qui communique avec ladite ouverture (18) d'entrée, et une chambre (21) aval communiquant avec ladite ouverture (19) de sortie,
- dans laquelle ladite ouverture (18) d'entrée est reliée de manière hydraulique au vérin (C1) hydraulique de pompage du levier (L1) de frein principal, tandis que ladite ouverture (19) de sortie est reliée de manière hydraulique au moins à l'actionneur (5) hydraulique du frein (FA) avant,
- ledit élément (15) flottant présentant un corps doté d'un passage (22) pour la communication hydraulique entre ladite chambre (20) amont et ladite chambre (21) aval, et étant doté d'un élément (23) de clapet qui coopère avec un siège (24) de clapet formé dans le corps de l'élément (15) flottant, pour commander ladite communication hydraulique par ledit passage (22),
- dans laquelle ledit élément (23) de clapet est associé à au moins un ressort (25) tendant à garder l'élément (23) de clapet en prise contre ledit siège (24) de clapet, dans une position fermée dans laquelle la communication hydraulique entre ladite chambre amont (20) et ladite chambre aval (21) est interrompue,
- ledit dispositif ABS comprenant en outre un moteur (M) électrique configuré pour commander la position de l'élément (15) flottant dans la cavité (17) du corps (16), d'une manière telle que :
- pendant un freinage normal, ledit moteur (M) électrique est inactif et ledit élément (15) flottant est à une position de fin de course dans la direction de la chambre (21) aval, dans laquelle l'élément (23) de clapet de l'élément (15) flottant interagit avec un élément (26) de butée du corps (16), qui maintient l'élément (23) de clapet dans une position ouverte, espacé dudit siège (24) de clapet, à l'encontre de l'action dudit au moins un ressort (25), de telle sorte que, pendant un freinage normal, le fluide pompé par le dispositif (C1) de pompage du levier d'actionnement principal peut s'écouler depuis ladite ouverture (18) d'entrée vers ladite ouverture (19) de sortie, dans la direction au moins de l'actionneur (5) hydraulique du frein (FA) avant hydraulique de la bicyclette,
- tandis que, dans des conditions qui requièrent l'activation de l'ABS, ledit moteur (M) électrique est configuré pour être activé et pour provoquer un déplacement de l'élément (15) flottant dans la direction de ladite chambre (20) amont et loin de ladite position de fin de course, de telle sorte que l'élément (23) de clapet est amené dans sa position fermée par ledit au moins un ressort (25), de manière à interrompre la communication entre la chambre (20) amont et la chambre (21) aval, et de telle sorte que la chambre (21) aval augmente en volume et génère une diminution de la pression du fluide apporté à l'actionneur (5) hydraulique du frein avant,
- dans lequel ledit dispositif (2) ABS comprend en outre un dispositif (23 ; 141) de clapet configuré pour ouvrir la communication entre la chambre (20) amont et la chambre (21) aval lorsque la pression dans la chambre (21) aval devient supérieure à la pression dans la chambre (20) amont d'une différence supérieure à un seuil prédéterminé.

5. Bicyclette électrique selon la revendication 4, **caractérisée en ce que** ladite ouverture (19) de sortie du dispositif ABS est reliée de manière hydraulique uniquement à l'actionneur (5) hydraulique du frein (FA) avant.

6. Bicyclette électrique selon la revendication 4, **caractérisée en ce que** ladite ouverture (19) de sortie du dispositif ABS est reliée de manière hydraulique à la fois à l'actionneur (5) hydraulique du frein (FA) avant et à l'actionneur (6) hydraulique du frein (FP) arrière.

7. Trottinette électrique, dotée d'une roue avant et d'une roue arrière et d'un système de freinage comme indiqué dans une ou plusieurs des revendications précédentes.
